# EUROPÄISCHE PATENTSCHRIFT

(11) **EP 1 249 466 B1**
(45) Veröffentlichungstag und Bekanntmachung des Hinweises auf die Patenterteilung: **08.11.2006**
(21) Anmeldenummer: 02004903.7
(22) Anmeldetag: 05.03.2002
(51) Int. Cl.: C08J 3/215, C08L 21/00, C08K 9/04

(54) **Silikatische Füllstoffe enthaltende Kautschukpulver, Verfahren zu ihrer Herstellung und Verwendung**
Rubber powders containing silicate fillers, process for preparing same and use
Poudres d'élastomères contenant des charges de silicates, procédé de préparation et son utilisation

(30) Priorität: 10.04.2001 DE 10117804
(43) Veröffentlichungstag der Anmeldung: 16.10.2002
(73) Patentinhaber: PKU Pulverkautschuk Union GmbH, 45764 Marl (DE)
(72) Erfinder: Görl, Udo, Dr., 45657 Recklinghausen (DE); Schmitt, Matthias, 69151 Neckargemünd (DE); Stober, Reinhard, Dr., 63594 Hasselroth (DE); Gouw, Andreas, 45721 Haltern (DE)

(56) Entgegenhaltungen:
- DE-A- 19 843 301
- STOCHEM - SPECIALTY CHEMICAL DISTRIBUTION, [Online] XP002235957 Gefunden im Internet: <URL:http://www.stochem.com/searchdb.asp?s earchStr2=Ultrasil> [gefunden am 2003-03-24]

## Beschreibung

Die Erfindung betrifft ein Verfahren zur Herstellung von mit Organosiliciumverbindungen modifizierten, Silanolgruppen tragenden Füllstoffen enthaltende Kautschukpulver, unter Verwendung von in organischen Lösungsmitteln hergestellten und/oder befindlichen Kautschuken, die so hergestellten Pulver und deren Verwendung in der kautschukverarbeitenden Industrie.

Über Ziel und Zweck des Einsatzes von Pulverkautschuken, sowie über mögliche Verfahren zu ihrer Herstellung, ist eine Vielzahl von Publikationen erschienen [1-3].

Die Erklärung für das Interesse an pulverförmigen Kautschuken ergibt sich zwanglos aus der Verarbeitungstechnik der Gummiindustrie. Dort werden die Kautschukmischungen mit einem hohen Aufwand an Zeit, Energie und Personal hergestellt. Hauptgrund dafür ist, dass der Rohstoff Kautschuk ballenförmig vorliegt und die weiteren Bestandteile der vulkanisierbaren Mischung in die Kautschukphase eingearbeitet werden müssen.

Die Zerkleinerung eines Ballens, die innige Vermischung mit Füllstoffen, Mineralölweichmachern und Vulkanisationshilfsmitteln erfolgt auf Walzen oder in Innenmischern in mehreren Verfahrensstufen. Zwischen den Stufen wird die Mischung im allgemeinen auf einer Batch-off-Anlage abgekühlt, als Fell auf Paletten abgelegt und zwischengelagert. Den Innenmischern bzw. Walzen werden entsprechende Extruder- oder Kalendrierprozesse nachgeschaltet.

Aus dieser sehr aufwendigen Technik der Kautschuk-Verarbeitung kann nur eine völlig neue Verarbeitungstechnologie herausführen.

Es wird daher seit längerem der Einsatz rieselfähiger Kautschukpulver diskutiert, weil sich damit die Möglichkeit ergibt, Kautschukmischungen analog thermoplastischer Kunststoffpulver bzw. Granulate einfach und schnell verarbeiten zu können.

Die allgemein in der Gummiindustrie eingesetzten Kautschukarten unterteilt man in ihrer Herstellung - der Polymerisation von diversen Monomeren - nach zwei grundsätzlich unterschiedlichen Verfahren:

### a) Polymerisation in Wasser (Emulsionspolymerisation)

Wie der Titel schon andeutet, werden bei diesem Verfahren die Ausgangsmonomere (z.B. Styrol, Butadien oder Acrylnitril) in Wasser unter Zuhilfenahme von geeigneten Startermolekülen radikalisch zu hochmolekularen Einheiten polymerisiert. Dabei bestimmen u.a. die verwendeten Monomerbausteine, deren prozentuales Verhältnis untereinander, sowie die gewählten Reaktionsbedingungen (z.B. Temperatur, Druck), die Zusammensetzung sowie den molekularen Aufbau des Polymerisats und dadurch auch das spätere anwendungstechnische Eigenschaftsprofil der fertigen Kautschukmischung. Nach der Polymerisation liegen die Kautschukmoleküle, bei Anwesenheit von Emulgatoren, als feinverteilte Tröpfchen in Wasser vor. Man spricht in diesem Zusammenhang von Kautschuklatex bzw. Kautschukemulsion. Sie bildet den Kautschukrohstoff für die Herstellung von Pulverkautschuk aus der Wasserphase, woraus dieser nach der Zugabe von Füllstoffen (z.B. Industrierusse bzw. gefällte silikatische Füllstoffe) in der Regel durch eine säurekatalytische Cofällung zwischen Kautschukemulsion und Füllstoff entsteht.

Die bekanntesten Kautschukarten, die in Wasser vorliegen bzw. hergestellt werden, sind der Naturkautschuk (NR), der Emulsions-Styrol-Butadien-Kautschuk (E-SBR), der Nitrilbutadienkautschuk (NBR) und der Chloroprenkautschuk (CR). Ein Verfahren zur Herstellung eines Pulverkautschuks aus einer in der Wasserphase durchgeführten Co-Fällung zwischen Kautschukemulsion und einem Füllstoff wird in DE-PS 28 22 148 beschrieben.

Man setzt gemäß dieser Patentschrift einem Kautschuk-Latex (z.B. Naturkautschuk) oder einer wässrigen Emulsion eines synthetischen Kautschuks (z.B. E-SBR) eine wässrige Füllstoffsuspension zu und fällt das gewünschte Kautschukpulver aus.

Um die nach diesem Verfahren erhaltenen, korngrößenabhängigen Füllstoffgehalte zu vermeiden, wurden Varianten angemeldet, die als DE-PS 37 23 213 und DE-PS 37 23 214 zum Stand der Technik gehören.

Neuere Veröffentlichungen zur Herstellung von Kautschukpulvern mittels einer Co-Fällung zwischen Füllstoff und Kautschukemulsion in Wasser, differenzieren deutlicher als bisher nach der Art und dem Umgang der einzelnen in der Gummiindustrie eingesetzten Füllstoffe. Hintergrund hierfür ist die gewonnene Erkenntnis, dass die verschiedenen Füllstoffklassen auch unterschiedliche Verfahren zur spezifikationsgerechten Herstellung eines Kautschukpulvers benötigen.

DE 198 16 972.8 beschreibt zum ersten Male den Einsatz von Organosilanen und den Umgang mit diesen Verbindungen bei der Herstellung der diese Substanzen beinhaltenden Kautschukpulver.

Die Patentschrift geht von sogenannten vorsilanisierten Füllstoffen aus, deren Herstellung z.B. in EP 0 442 143 B1 und EP-A 0 126 871 beschrieben wird. Darunter versteht man ein Verfahren, bei dem man den Füllstoff, z.B. eine Kieselsäure, zunächst in einem Mischvorgang mit dem Organosilan homogenisiert und anschließend bei erhöhter Temperatur zur Reaktion bringt. Dieser Homogenisierungsprozess kann unter Verwendung von getrocknetem Füllstoff (Trockenverfahren) oder auch in wässriger Suspension erfolgen (Nassverfahren). Dieses fertige Reaktionsprodukt aus Füllstoff und Organosilan suspendiert man für die Herstellung des Kautschukpulvers erneut in Wasser, vereinigt diese Suspension mit der Kautschukemulsion und koaguliert den Latex/die Kautschukemulsion mit Hilfe von Säuren.

Die vielen hierfür notwendigen Verfahrensschritte der vorab durchgeführten Rohstoffbehandlung machen die Herstellung eines Kautschukpulvers zu einem aufwendigen und damit kostspieligen Verfahren. Der genannte Trockensilanisierungsprozess kommt darüber hinaus an seine Grenzen, wenn es um den Einsatz von kostengünstigeren und auch anwendungstechnisch interessanten Vorstufen der Kieselsäureherstellung, wie z.B. Kieselsäurefilterkuchen oder gar Fällsuspension, geht. Hier kann nur ein Kautschukpulverherstellverfahren angewandt werden, bei dem das Organosilan während des Herstellprozesses des Kautschukpulvers direkt zugesetzt wird. DE 198 43 301.8 (ausgehend von Kieselsäurefilterkuchen) und DE 100 56 696.0 (ausgehend von KS-Fällsuspension) beschreiben diese Verfahren und die hierfür notwendige Vorgehensweise.

### b) Polymerisation in org. Lösungsmitteln

Die zweite große Gruppe der Kautschuke stellen Produkte dar, die in einem organischen Lösemittel i.d.R. anionisch polymerisiert werden und damit nach der Polymerisation in der Regel auch in diesem Lösungsmittel vorliegen. Der Prozess zur Herstellung eines Kautschukpulvers aus Lösungspolymeren (in org. Lösungsmittel gelöst) und Füllstoffen, muss daher dieser völlig anders gearteten Kautschukausgangsform gerecht werden.

Wichtige Kautschukarten, die in org. Lösungsmitteln hergestellt werden, sind u.a. Styrol-Butadien-Kautschuk auf Basis Lösungspolymerisation (L-SBR), Butadienkautschuk (BR), Butyl- und Halogenbutylkautschuke, sowie Ethylen-Propylen-Kautschuke mit (EPDM) und ohne (EPM) einpolymerisierter Terkomponente.
Auch die Herstellung von Füllstoff enthaltenden Kautschukpulvern aus Kautschuklösungen wurden in der Patentliteratur bereits eingehend beschrieben. Dabei wurden prinzipiell zwei unterschiedliche Verfahren gewählt. Sie stellen den Stand der Technik auf ihrem Gebiet dar. DE 21 35 266, DE 22 14 121, Offenlegungsschriften 23 24 009, 23 25 554, 23 32 796, DE 26 54 358 und DE 24 39 237 beschreiben Verfahren, bei denen die organische Kautschuklösung zunächst mit Hilfe großer Mengen von Emulgatoren in eine wässrige Emulsion überführt wird. Das Wasser enthält weiterhin Anteile des Fällmittels, i.d.R. Schwefelsäure. Zu dieser Emulsion gibt man den im Wasser suspendierten Füllstoff, in der Regel Russ und läßt die Gesamtemulsion in eine heiße Natrium-Wasserglas-Lösung einfließen. Es kommt hierbei zu einer Co-Fällung zwischen Kautschuk und Füllstoff bei gleichzeitiger Entfernung des Lösungsmittels. Das Verfahren der Herstellung ist daher sehr eng angelehnt an die Verfahren zur Herstellung von Kautschukpulvern unter Verwendung wässriger Polymersysteme und beruht auf dem Koagulationsprinzip durch Säurezugabe. Der Einsatz großer Mengen Emulgatoren dient dazu, die Phasenunverträglichkeit zwischen organischer Polymerlösung und wässriger Füllstoffsuspension aufzuheben. Die Patentschriften beziehen sich nahezu ausschließlich auf russgefüllte Systeme. Kieselsäurehaltige Produkte werden nur am Rande erwähnt, der Umgang mit Organosilanen, der jedoch für die spätere Anwendung kieselsäuregefüllter Systeme, zumindest in hochbeanspruchten Gummimischungen, zwingend notwendig ist, findet keinen Eingang in den Patenten. Das gewählte Verfahren und die drastischen Versuchsbedingungen (Schwefelsäure, heiße Alkalisilikatlösung) würde das Organosilan ohne Zerstörung seiner Molekülstruktur allen Erfahrungen nach [4] auch nicht überstehen.

Die Offenlegungsschrift 22 60 340 beschreibt ein deutlich anderes Verfahren, bei dem die Kautschuklösung mit dem Füllstoff vermischt und anschließend das Lösungsmittel durch Druckentspannung blitzartig verdampft wird. Die eingesetzten Temperaturen erreichen bis 285 °C, auch im Beispielteil werden Temperaturen von 150 °C nicht unterschritten.

Das Verfahren ist damit eindeutig auf die Verwendung von Russfüllstoffen zugeschnitten. Der Einsatz von Kieselsäuren in Kombination mit Organosilanen ist mit diesem Verfahren aus Thermostabilitätsgründen des Silanes nicht möglich.

Hochkieselsäuregefüllte/Organosilanhaltige Kautschukmischungen werden seit Anfang der 90er Jahre in zunehmenden Maße in PKW-Laufflächenmischungen eingesetzt [5 - 7], wenn es darum geht den Rollwiderstand des Reifens herabzusetzen und damit den Verbrauch an Kraftstoffen zu reduzieren. Gleichzeitig haben diese Mischungen ein deutlich verbessertes Naßrutschverhalten, sowie günstigere Winterlaufeigenschaften. Die Kombination dieser gewünschten Reifeneigenschaften, die zusätzlich noch Verbesserungen im Reifenabriebwiderstand und damit die Erhöhung der Lebensdauer eines Reifens beinhaltet, gelingt, nach heutigem Kenntnisstand, nur im Verbund eines hochkieselsäuregefüllten Füllstoff/ Silansystems und der Verwendung neuer Kautschuktypen auf Basis hochvinylhaltiger L-SBR-Typen, im Verschnitt mit Butadienkautschuk. Um u.a. gerade diese Systeme auf Basis L-SBR bzw. BR/Kieselsäure/Silan in Form von Kautschukpulvern mit den gewünschten Reifeneigenschaften darstellen zu können, bedarf es neuer Entwicklungen und Herstellwege, die in den bisherigen Patentschriften nicht beschrieben wurden.

Das Kieselsäure/Silansystem, wie es der Anwender in den heutigen Verarbeitungsprozessen der Gummiindustrie, ausgehend vom Ballenkautschuk und Kieselsäurefüllstoff, in der Regel in granulierter Form und der direkten Zugabe des Silans im Knetprozess einsetzt und verarbeitet, stellt den Compounder vor zahlreiche, auch heute zum Teil noch nicht befriedigend gelöste Probleme [8 - 10].

Der Compounder verwendet zum ersten Male den Innenmischer in Abweichung von dessen eigentlicher Aufgabe - dem Einmischen und der innigen Vermischung verschiedener Mischungsbestandteile, sowie der Erhöhung der für das spätere Wertebild notwendigen Wechselwirkung zwischen Kautschuk und Füllstoff- sondern als eine Art chemischen Reaktor. Er hat während des Mischprozesses eine Reaktion zwischen Kieselsäure und Organosilan unter Abspaltung und Freisetzung großer Mengen an Ethanol durchzuführen [10]. Die korrekte Ausführung dieser Reaktion ist jedoch entscheidend für das spätere Eigenschaftsbild des fertigen Gummiartikels. Theoretische und praktische Untersuchungen [8, 9, 11] haben gezeigt, dass diese Umsetzung zwischen Füllstoff und Organosilan, wie jede chemische Reaktion, eine bestimmte Reaktionsdauer benötigt, die sich in den kinetischen Meßgrößen, wie Reaktionsgeschwindigkeit und Aktivierungsenergie, ausdrücken lässt [9]. Heute ist dem Anwender des Kieselsäure/Silansystems bekannt, dass die Reaktionszeit für eine vollständige Umsetzung (Anbindung des Silans auf der Kieselsäureoberfläche) der beiden Reaktionspartner unter den Gegebenheiten eines Innenmischers deutlich längere Zeit benötigt, als eine ansonsten üblicherweise notwendige Inkorporation des Füllstoffes in die Kautschukmatrix, mit anschließendem Dispergierschritt. Mit anderen Worten, aufgrund der langsamen Reaktion zwischen Kieselsäure und Silan muss der Mischprozess über Gebühr verlängert werden. In der Praxis liegt die Mischdauer Kieselsäure/Silangefüllter Kautschuksysteme heute bei 12 - 15 Minuten, während die Mischdauer eines russgefüllten Standardsystems längstenfalls mit ca. 5 Minuten zu veranschlagen ist. Hiermit wird ein weiteres wichtiges Ziel des erfindungsgemäßen Patentgegenstandes offensichtlich. Neben der reinen Darstellung eines Kautschukpulvers aus einer Kautschuklösung und einem silikatischen Füllstoff, insbesondere einer gefällten hochaktiven Kieselsäure, gilt das Augenmerk auch dem spezifikationsgerechten Einsatz dieses Füllstoffs und dessen Umsetzung mit dem Organosilan. Mit anderen Worten, das fertige Kautschukpulver muss das Kieselsäure/Silansystem mit abgeschlossener Silanisierungsreaktion beinhalten. Nur dann erhält der Anwender ein Produkt in Form eines pulverförmigen Kautschuk/Kieselsäure/Silan-Verbundes, der seinen anwendungs-technischen Anforderungen an diese Produktklasse entspricht. Die wichtigsten dieser Anforderungen sind hierbei seitens der Verarbeitung, eine zufriedenstellende Förder- und Silierbarkeit, leichte Verarbeitbarkeit, kurze Mischzeiten und geringe Mischstufenzahl und damit reduzierter Energieeinsatz und erhöhte Mischkapazität.

Seitens der Arbeitsplatzhygiene wäre zu nennen, eine verringerte Staubemission und die Vermeidung einer Ethanolentwicklung während der Silanisierungsreaktion, wie sie heute noch zum Stand der Technik gehört.

Darüber hinaus müssen die gummitechnischen Kennzahlen ein mindestens gegenüber dem heutigen Standard vergleichbares Wertebild ergeben.

Die Herstellung eines erfindungsgemäßen Kautschukpulvers als Verbundsystem, bestehend aus einem Kautschuk, hergestellt nach dem Lösungspolymerisationsverfahren, einem silikatischen Füllstoff, insbesondere einer gefällten hochaktiven Kieselsäure und einem Trialkoxysilylgruppentragenden und damit kieselsäurereaktivem Organosilan, erhält seine Kompliziertheit und Komplexizität durch die Tatsache, dass die drei Einzelkomponenten unterschiedliche Polarität und damit unterschiedliche Phasenverträglichkeit besitzen bzw. sich in Medien (org. Lösungsmittel bzw. Wasser) befinden, die diese Polaritätsunterschiede und Unverträglichkeiten zum Teil noch verstärken.

Lösungskautschuke wie z.B. L-SBR, BR, EPDM und Hal-Butyl werden in der Regel in unpolaren Lösungsmitteln wie Cyclohexan oder Heptan, aber auch Toluol bzw. Benzol polymerisiert. Die Kautschuke bilden mit dem jeweiligen org. Lösemittel ein unpolares Einphasensystem.

Die für die Herstellung der Kautschukpulver eingesetzten silikatischen Füllstoffe, insbesondere gefällte Kieselsäuren, tragen auf ihrer Oberfläche Silanolgruppen. Die Produkte sind daher polar. Hinzu kommt, dass alle Kieselsäuren mehr oder weniger große Anteile an adsorptiv auf der Oberfläche gebundenem Wasser enthalten. Gerade wenn man von Kieselsäuren aus Vorstufen der Herstellung, wie z.B. salzfrei gewaschenem Filterkuchen oder Fällsuspension ausgeht, ist der Anteil an Wasser beträchtlich.

Getrocknete Kieselsäure, mit Silan vormodifiziert oder auch nicht, enthält in der Regel zwischen 4 - 8 % adsorptiv gebundenes Wasser.

Beim salzfrei gewaschenen Filterkuchen, der Vorstufe vor der Kieselsäuretrocknung, beträgt der Wasseranteil, der zum großen Teil in der Kieselsäurestruktur sitzt, etwa 80 %.

Bei 90 - 95 % Wassergehalt liegt der Wert bei der Verwendung von Kieselsäurefällsuspension, der Vorstufe zum Filterkuchen. Die Aufstellung macht deutlich, dass es sich bei einer Abmischung der oben beschriebenen Kautschuklösung mit der Kieselsäuresuspension, als Ausgangspunkt für die Herstellung eines pulverförmigen Kautschuk/Füllstoff-Verbundes, immer um ein Zweiphasengemisch handelt.

Die erfindungsgemäßen Kautschukpulver werden unter Verwendung einer oder mehrerer Organosiliciumverbindungen der allgemeinen Formel:

[Rₙ-(RO)₃₋ₙ Si-(Alk)ₘ-(Ar)ₚ]_{q}[B] (I)

R¹ ₙ-(RO)₃₋ₙ Si-(Alkyl) (II)

oder

R¹ ₙ-(RO)₃₋ₙ Si-(Alkenyl) (III)

hergestellt, in denen bedeuten:
- B:: -SCN, -SH, -CI, -NH₂ (wenn q=1) oder -Sx- (wenn q=2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können.
- n:: 0; 1 oder 2
- Alk:: einen zweiwertigen geraden oder verzweigten Kohlenstoff- rest mit 1 bis 6 Kohlenstoffatomen,
- m:: 0 oder 1
- Ar:: einen Arylenrest mit 6 bis 12 C-Atomen
- p:: 0 oder 1 mit der Maßgabe, dass p und n nicht gleichzeitig 0 bedeuten
- x:: eine Zahl von 2 bis 8
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen

Die wichtigsten heute in der Gummiindustrie eingesetzten Vertreter, wie Bis(triethoxysilylpropyl) tetra- bzw. disulfan [12] oder Merkaptopropyltrialkoxysilan bzw. Thiocyanatopropyltriethoxysilan sind mehr oder weniger unpolar und damit nahezu wasserunlöslich. Auf der anderen Seite soll sich das Silan chemisch oder adsorptiv auf der Kieselsäure, die in Wasser suspendiert vorliegt, anbinden, was aufgrund der Phasenunverträglichkeit zwischen Silan und Kieselsäure im Wasser so nicht möglich ist.

Die Nachteile des Standes der Technik wurden mit dem erfindungsgemäßen Verfahren gemäß den Ansprüchen überwunden. Das Verfahren dient zur Herstellung von feinteiligen Kautschukpulvern, bestehend aus einem oder mehreren silikatischen Füllstoffen, einem oder mehreren bifunktionellen Organosilanen und einer oder mehreren Kautschukart(en), hergestellt nach dem Lösungspolymerisationsverfahren und/oder sich in einem organischen Lösungsmittel befindlichen Kautschuk,
dadurch gekennzeichnet, dass man:
a) den oder die silikatischen Füllstoff(e) und die Organosiliciumverbindung(en) direkt oder vormodifiziert, gegebenenfalls in Anwesenheit einer oberflächenaktiven Substanz und/oder gegebenenfalls einer oder mehrerer Kieselsäureoberflächenaktivierender Substanz(en) in Wasser emulgiert,
b) die so hergestellte Suspension im pH-Wert Bereich von 5 - 10, bevorzugt 6 - 8, mit ≤ 15 phr einer Kautschukemulsion versetzt, gegebenenfalls den pH-Wert des Gemisches mittels einer Brönsted oder Lewissäure auf einen Wert von 2 - 7, bevorzugt 4 - 5, einstellt,
c) gegebenenfalls das unter a) oder unter a) und b) hergestellte Gemisch bei einer Temperatur von 30 - 90 °C, bevorzugt 50 - 80 °C, für 5 - 120 min, bevorzugt 20 - 40 min, erhitzt,
d) anschließend das im organischen Lösungsmittel befindliche Polymer zur unter a) und b) und c) hergestellten Füllstoffsuspension hinzu gibt,
e) anschließend das organische Lösungsmittel abtrennt,
f) das sich anschließend im Wasser befindliche Kautschukpulver nach Methoden der Fest/Flüssig-Trennung vom größten Teil des Wassers befreit,
g) das Produkt durch geeignete Granulationstechniken in partikulierte Form bringt (hierzu gibt es am Markt angebotene Maschinen),
h) mit üblichen Trocknungsmethoden auf Restfeuchten ≤ 2 % einstellt.

Das erfindungsgemäße Verfahren dient zur Herstellung eines freifließenden Kautschukpulvers, bestehend aus Lösungskautschuk, silikatischem Füllstoff und Organosilan im jeweils gewünschten Gewichtsverhältnis, wobei die phasenunverträglichen oder gegenläufig verträglichen Rohstoffausgangsformen im fertigen Kautschukpulver so in Reihung gebracht werden, dass das Silan sich während der Herstellung des erfindungsgemäßen Kautschukpulver zunächst homogen auf der Kieselsäure verteilt, im Verlauf des Herstellprozesses chemisch umsetzt und gleichzeitig das Polymer sich auf diesen Kieselsäure/Silan-Komplex ebenfalls mit der nötigen Homogenität adsorptiv bindet. Nur in dem Falle, in dem die Nachstellung des heutigen Mischprozesses im Kneter, bei dem ausgehend vom Ballenkautschuk, Kieselsäurepulver (oder anderen silikatischen Füllstoffen) bzw. Granulat und Organosilan sowohl die Umsetzung zwischen Füllstoff und Silan (Silanisierungsreaktion unter Ethanolabspaltung) als auch die Inkorporation und Verteilung der Kieselsäure in der Kautschukphase, auf einen chemischen Reaktor, wie er im Kautschukpulverherstellprozess eingesetzt wird, übertragen werden kann, ist es möglich, dass das gummitechniche Wertebild, dass sich mit dem erfindungsgemäßen Kautschukpulver erzielen lässt, mindestens dem der konventionellen oben genannten Mischweise entspricht.

Gegenstand der Erfindung ist ein Verfahren zur Herstellung feinteiliger Kautschukpulver aus einer Kieselsäure/Silansuspension oder einem anderen silikatischen Füllstoff in Wasser und einer Kautschuklösung in einem org. Lösungsmittel.

Das Verfahren ist dadurch gekennzeichnet, dass die Herstellung des erfindungsgemäßen Kautschuk/ silikatischer Füllstoff/Organosilan-Verbundes aus einem Zweiphasensystem heraus, durch Überführung in ein Einphasensystem erfolgt.

Das Verfahren ist dadurch gekennzeichnet, dass der silikatische Füllstoff und das Organosilan getrennt, im Kautschukpulverherstellprozess eingebracht wird.

Das Verfahren ist dadurch gekennzeichnet, dass silikatischer Füllstoff und Organosilan gegebenenfalls in Gegenwart von oberflächenaktiven Substanzen, bevorzugt nichtionische, kationische und anionische Tenside, deren Konzentration in der Emulsion zwischen 0,1 - 2 %, bevorzugt 0,2 - 1 %, bezogen auf den Füllstoffanteil beträgt, innig miteinander in Wasser homogenisiert werden.

Beispiele für derartige Tenside sind Alkylphenolpolyglycolether, Polyglycole, Alkyltrimethylammoniumsalze, Dialkyldimethylammoniumsalze, Alkylbenzyltrimethylammoniumsalze, Alkylbenzolsulfonate, Alkylhydrogensulfate, Alkylsulfate.

Das Verfahren ist dadurch gekennzeichnet, dass gegebenenfalls Kieselsäurenetzwerkdestabilisierende und Wasserstoffbrückenbindungen schwächende Substanzen zur Füllstoffsuspension in Mengen von 0,3 - 9 % bezogen auf den Füllstoff, bevorzugt 3,5- 6,5 %, hinzugefügt werden. Man kann diese Substanzen als Füllstoffaktivatoren bezeichnen.

Die bekanntesten Vertreter dieser Verbindungen befinden sich in der Klasse der Polyalkohole und Amine.

Typische Vertreter, wie sie auch häufig in der Gummiindustrie als Sekundärbeschleuniger bei kieselsäurehaltigen Mischungen eingesetzt werden, sind: Diethylenglycol (DEG), Polyethylenglycol (PEG), Polywachse, Triethanolamin (TEA), Diphenylguanidin (DPG) und Di-o-tolylguanidin (DOTG).

Das Verfahren ist dadurch gekennzeichnet, dass die Füllstoff/Organosilansuspension in An- oder Abwesenheit der o.g. Additive gegebenenfalls bei Temperaturen von 30 - 90 °C, bevorzugt 50 - 80 °C, für 5 - 120 min, bevorzugt 20 - 40 min, erhitzt wird.

Das Verfahren ist dadurch gekennzeichnet, dass zur Füllstoff/Silansuspension geringe Anteile einer Kautschukemulsion zugegeben werden. Deren Anteil am Gesamtkautschuk übersteigt jedoch 15 phr nicht und liegt in der Regel bei ≤ 5 phr.

Das Verfahren ist dadurch gekennzeichnet, dass nach Zugabe der wässrigen Kautschukemulsion gegebenenfalls eine Koagulation unter Absenkung des pH-Wertes auf Werte von 2 - 7, bevorzugt 4 - 5, erfolgt. Hierzu dienen gängige Brönsted- oder Lewissäuren, bevorzugt Al₂(SO₄)₃.

Die Zugabe der Kautschukemulsion und deren Koagulation kann vor oder nach dem Erhitzen, bevorzugt vor dem Erhitzen der Füllstoff/Silansuspension erfolgen.

Das Verfahren ist dadurch gekennzeichnet, dass die chemische Umsetzung zwischen silikatischem Füllstoff und Organosilan unter Alkoholfreisetzung während des Kautschukpulver-Herstellprozesses erfolgt.

Das Verfahren ist in einer Variante dadurch gekennzeichnet, dass das Organosilan bereits chemisch mit dem silikatischen Füllstoff zu einem sogenannten vorsilanisierten Füllstoff umgesetzt wurde und als Reaktionsprodukt in den Kautschukpulverherstellprozess eingebaut wird.

Das Verfahren ist dadurch gekennzeichnet, dass die Herstellung des Kautschuk/Füllstoff/Silan-Verbundes, durch Überführung aus einem Zweiphasensystem in ein Einphasensystem nicht über eine gemeinsame säurekatalysierte Koagulation des ursprünglich im org. Lösungsmittel befindlichen Kautschuks und der in Wasser befindlichen Füllstoff/Silan-Suspension erfolgt.

Das Verfahren ist dadurch gekennzeichnet, dass sich der eigentliche Kautschuk/silikatische Füllstoff/ Organosilan-Verbund in der Wasserphase ausbildet.

Das Verfahren ist dadurch gekennzeichnet, dass weitere üblicherweise in einer fertigen Kautschukmischung eingesetzte Mischungsbestandteile dem Herstellungsprozess des Kautschukpulvers zugefügt werden können. Hierbei sind u.a. zu nennen: Mineralische Weichmacher, Industrierusse unterschiedlicher Oberfläche (Jodadsorption) und Struktur (DBP-Zahl), helle nicht silikatische Füllstoffe (z.B. Kreiden) Verarbeitungshilfsmittel, Aktivatoren, Alterungsschutzmittel und Vernetzungschemikalien in den anwendungstechnisch üblichen Konzentrationen.

Das Verfahren ist dadurch gekennzeichnet, dass der im Wasser befindliche Kautschuk/silikatischer Füllstoff/ Organosilan-Verbund über geeignete Verfahren der Fest/Flüssig-Trennung vom größten Teil des Prozesswassers abgetrennt wird.

Das Verfahren ist dadurch gekennzeichnet, dass der feuchte Produktkuchen gegebenenfalls mittels allgemein bekannter Techniken der Formgebung teigartiger Adhäsionsprodukte in partikuläre, insbesondere nach dem Trocknen freifließende, förder- und silierbare Darreichungsformen überführt wird.

Das Verfahren ist dadurch gekennzeichnet, dass das Produkt nach der Formgebung unter Verwendung üblicher Trocknungsverfahren auf einen Restfeuchtegehalt von etwa 2 % getrocknet wird.

Die Verfahren sind dadurch gekennzeichnet, dass die Herstellung der Kieselsäuresilansuspension je nach Rohstoffart nach zwei unterschiedlichen allgemeinen Verfahren durchgeführt wird. Auf sie soll daher näher eingegangen werden.

### a) Einsatz eines vorsilanisierten silikatischen Füllstoffs

Das vorab aus einer chemischen Umsetzung zwischen einem silikatischen Füllstoff und einem Organosilan erhaltene silanmodifizierte Reaktionsprodukt wird in Wasser mit Hilfe eines Rühraggregates bei einer Temperatur von 10 bis 60 °C, bevorzugt Raumtemperatur, suspendiert. Die Suspensionsdichte kann hierbei zwischen 0,5 - 15 %, bevorzugt zwischen 5-12 %, variieren und wird im großen und ganzen nach oben durch die Pumpbarkeit der Suspension und nach unten durch die produktions- und kostentechnisch zuträgliche Raum/Zeitausbeute begrenzt. Zu dieser so hergestellten Füllstoffsuspension gibt man bis ≤ 15 phr, bevorzugt ≤ 5 phr einer Kautschuk-(Latex)-Emulsion hinzu und mittels einer Brönsted oder Lewissäure wird koaguliert. Das Aufbringen einer dünnen Kautschukschicht führt zu einer besseren Anbindung des Lösungspolymeren im späteren Herstellverlauf der erfindungsgemäßen Kautschukpulver. Inwieweit diese Maßnahme notwendig ist, hängt in erster Linie von der auf dem Füllstoff gebundenen Silanmenge ab. Höhere Silanmengen benötigen keine oder nur geringe Mengen des Koagulationsproduktes auf der Oberfläche, geringere Silanmengen entsprechend mehr. Letztendlich ist die Füllstoffoberfläche für die Aufnahme des Lösungspolymers bis zu einem gewissen Grade zu hydrophobieren. Dies erfolgt mittels Silan und Koagulationskautschuk. Die Menge des einen oder anderen Agenz hängt somit immer auch von der Menge des anderen ab. Da jedoch die Menge des Organosilans für das spätere gummitechnische Wertebild entscheidend ist, stellt diese zunächst die Vorgabe dar, nach der die Menge des Koagulationskautschuks zu richten ist.

Von den besonders bevorzugten Emulsionskautschuken für diesen Hydrophobierungsschritt sind E-SBR und NR zu nennen, da sie in der Regel auch gute Verträglichkeit mit den später auf dem Füllstoff aufzubringenden wichtigsten Lösungskautschuken besitzen.

Die pH-Werte, die bei diesem Füllstoff/Silan-Oberflächenmodifizierungschritt eingestellt werden, liegen zwischen 2 - 7, bevorzugt 4 - 5.

Zu dieser so hergestellten, bzw. vorbereiteten Füllstoffsuspension, bestehend aus einem silikatischen Füllstoff und einem zuvor mit diesem umgesetzten Organosilan, wird unter Atmosphären- oder erhöhtem Druck, der im organischen Lösungsmittel gelöste Kautschuk in einem oder auch schrittweise zugegeben. Hierbei kann die Füllstoffsuspension in einem Temperaturbereich von 10 - 100 °C, bevorzugt 20 - 60 °C, liegen. Im Falle höherer Temperaturen als RT muss die Füllstoffsuspension zuvor, mittels gängiger Maßnahmen auf die gewünschte Temperatur gebracht werden.

Unter permanentem Rühren wird schließlich das organische Lösungsmittel abgezogen, wobei sich die Temperatur des Reaktionsgemisches natürlich an der druckabhängigen Siedetemperatur des Lösungsmittels zu orientieren hat. In einer besonderen Ausführungsform ließe sich das Lösungsmittel durch zusätzliches Anlegen eines Vakuums beschleunigt aus dem Reaktionsgefäß entfernen. Es können die gängigen Destillationsverfahren angewendet werden.

Entscheidend bei diesem Verfahrensschritt ist der kontinuierliche Übergang des Lösungspolymeren in die wässrige Phase, in der sich - wie oben beschrieben - die vorbereitete Füllstoffsuspension befindet. Das ursprünglich im Lösungsmittel befindliche Lösungspolymer zieht sich auf den Füllstoff auf und erhält dabei eine kornartige Struktur, die u.a. durch die Füllstoffteilchen, aber auch durch weitere Herstellparameter wie z.B. der eingebrachten Rührerenergie und Rührergeometrie bestimmt wird.

Nach der Entfernung des Lösungsmittels wird die verbleibende wässrige Phase, die das gesamte Produkt enthält, über einen Filtrationsprozess vom größten Teil des Wassers befreit. Die Fest/Flüssigtrennung läßt sich mit Hilfe bekannter Verfahren durchführen.

Nur beispielhaft wären zu nennen die Filtration über einen Büchnertrichter, sowie der Einsatz einer Zentrifuge oder einer Filterpresse. Nach der Fest/Flüssig-Trennung kann eine weitere Optimierung der Kornform, hin zu einem späteren freifließenden Kautschukpulver notwendig werden. Diese erfolgt unter Einsatz üblicher Granulationstechniken. Zum Schluss wird das Produkt mittels bekannter Trocknungverfahren, besonders zu bevorzugen sind hierbei die Verwendung eines Konvektions- oder eines Kontakttrockners, getrocknet. Wichtig ist hierbei, dass die Temperatur, mit der das Produkt beaufschlagt wird, weder das Organosilan noch den Kautschuk thermisch schädigt. Als besonders geeignet haben sich daher Trocknungstemperaturen im Bereich von 80 - 140 °C, insbesondere 100 - 120 °C, erwiesen.

### b) Verfahren bei Verwendung von silikatischem Füllstoff und Organosilanen

Die Herstellung der Füllstoff/Silansuspension unterscheidet sich von a) wie folgt:
Der silikatische Füllstoff, das Organosilan, Kieselsäureaktivator in Mengen von 0,3 - 9 % bezogen auf den Füllstoff, bevorzugt 3,5 - 6,5 %, 0,1 - 2 % Tenside, bevorzugt 0,2 - 1 %, bezogen auf den Füllstoffanteil werden in Wasser suspendiert und dabei eine Suspensionsdichte von 0,5 - 15 %, bevorzugt 5 - 12 %, eingestellt.

Gegebenenfalls erfolgt anschließend eine Einstellung des pH-Wertes der Suspension unter Zugabe einer Lauge, bevorzugt NaOH, im Bereich von 5 - 10, bevorzugt 6 - 8. Anschließend wird die Suspension mit einer Kautschuk-(Latex)-Emulsion versetzt, deren Anteil an der Gesamtkautschukmenge ≤ 15 phr, bevorzugt ≤ 5 phr nicht überschreitet. Anschießend wird die Suspension auf einen pH-Wert von 2 - 7, bevorzugt 4 - 5 mittels einer Säure, bevorzugt Al₂(SO₄)₃ eingestellt und das gesamte Gemisch bei einer Temperatur von 30 - 90 °C, bevorzugt 50 - 80 °C, für ca. 5 - 120 min, bevorzugt 20 - 40 min, erhitzt.

Anschließend fügt man das in organischem Lösungsmittel gelöste Polymer zur Suspension hinzu und führt die weitere Herstellfolge und Aufarbeitung gemäß a) durch. Das Organosilan reagiert in diesem Fall mit den Silanolgruppen des silikatischen Füllstoffs während der Trocknung des erfindungsgemäßen Kautschukpulvers.

Die in den erfindungsgemäßen Kautschukpulvern enthaltenen natürlichen und gefällten silikatischen Füllstoffe (u.a. Kieselsäurefüllstoffe), auch als Gemisch von zwei oder mehreren dieser Füllstoffe, sind an sich in der Kautschuktechnologie bekannte Füllstoffe. Wesentliche Voraussetzung für ihre Eignung ist das Vorhandensein von Silanol-Gruppen auf der Oberfläche der Füllstoffteilchen, die mit den Alkoxygruppen der Organosiliciumverbindungen reagieren können. Es handelt sich um oxidische und silikatische Füllstoffe, die mit Kautschuken verträglich sind, und die für diese Verwendung notwendige und bekannte Feinteiligkeit aufweisen.

Als natürliche Silikate sind besonders Kaoline oder Clays geeignet. Aber auch Kieselgur oder Diatomeenerde können eingesetzt werden.

Silikatische Füllstoffe werden in der Regel nach ihrer Stickstoffoberfläche (gem. ISO 5794/1D) als Maß für ihre Aktivität und nach ihrer Struktur (DBP-Zahl) gemäß ASTM D2412 eingeteilt.

Bei den eingesetzten Füllstoffen handelt es sich um Produkte im Oberflächenbereich von 1 - 1 000 m²/g, bevorzugt 100 - 250 m²/g, und einem Strukturbereich von 150 - 400 ml/100 g, bevorzugt 200 - 300 ml/100 g, DBP-Zahl.

Die erfindungsgemäßen Kautschukpulver enthalten die silikatischen Füllstoffe in Reinform oder als Gemisch mehrerer Produkte in Mengen von 5 - 300 phr, bevorzugt 20 - 85 phr.

Die erfindungsgemäßen Kautschukpulver werden unter Verwendung einer oder mehrerer Organosiliciumverbindungen der allgemeinen Formel I - III hergestellt,

[Rₙ-(RO)₃₋ₙ Si-(Alk)ₘ-(Ar)ₚ]_{q} [B] (I)

R¹ ₙ-(RO)₃₋ₙ Si-(Alkyl) (II)

oder

R¹ ₙ-(RO)₃₋ₙ Si-(Alkenyl) (III)

in denen bedeuten:
- B:: -SCN, -SH, -CI, -NH₂ (wenn q=1) oder -Sx- (wenn q=2)
- R und R¹:: eine Alkylgruppe mit 1 bis 4 Kohlenstoffatomen, verzweigt oder nicht verzweigt, den Phenylrest, wobei alle Rest R und R¹ jeweils die gleiche oder eine verschiedene Bedeutung haben können,
- n:: 0; 1 oder 2
- Alk:: einen zweiwertigen geraden oder verzweigten Kohlenstoff- rest mit 1 bis 6 Kohlenstoffatomen,
- m:: 0 oder 1
- Ar:: einen Arylenrest mit 6 bis 12 C-Atomen
- p:: 0 oder 1 mit der Maßgabe, dass p und n nicht gleichzeitig 0 bedeuten
- x:: eine Zahl von 2 bis 8
- Alkyl:: einen einwertigen geraden oder verzweigten ungesättigten Kohlenwasserstoffrest mit 1 bis 20 Kohlenstoffatomen, bevorzugt 2 bis 8 Kohlenstoffatomen
- Alkenyl:: einen einwertigen geraden oder verzweigten gesättigten Kohlenwasserstoffrest mit 2 bis 20 Kohlenstoffatomen, bevorzugt 2 bis 8 Kohlenstoffatomen

Beispiele für vorzugsweise eingesetzte Organosilane sind die z.B. nach der BE-PS 787 691 herstellbaren Bis(trialkoxysilyl-alkyl)oligosulfide, wie Bis-(trimethoxy-, triethoxy-, -dimethoxy-ethoxy-, -tripropoxy-, -tributoxy-, -tri-i-propoxy- und -tri-i-butoxy-silylmethyl)-oligosulfide und zwar insbesondere die Di-, Tri-, Tetra-, Penta-, Hexasulfide usw., weiterhin Bis-(2-trimethoxy-, -triethoxy-, -dimethoxy-ethoxy-, -tripropoxy- und -tri-n- und -i-butoxy-ethyl)-oligosulfide und zwar insbesondere die Di-, Tri-, Tetra-, Penta-, Hexasulfide usw., ferner Bis-(3-trimethoxy-, -triethoxy-, -dimethoxy-ethoxy-, -tripropoxy- und -tri-n- und -i-butoxy-ethyl)-oligosulfide und zwar wiederum die Di, Tri, Tetrasulfide usw. bis Octasulfiden, des weiteren die entsprechenden Bis-(3-trialkoxysilylisobutyl)-oligosulfide, die entsprechenden Bis-,(4-trialkoxysilylbutyl)-oligosulfide. Von diesen ausgewählten, relativ einfach aufgebauten Organosilanen der allgemeinen Formel I werden wiederum bevorzugt die Bis-(3-trimethoxy-, triethoxy- und tripropoxysilylpropyl)oligosulfide, und zwar die Di-, Tri-, Tetra- und Pentasulfide, insbesondere die Triethoxyverbindungen mit 2, 3 oder 4 Schwefelatomen und deren Mischungen. Speziell geeignet sind auch Silane mit der folgenden Strukturformel:

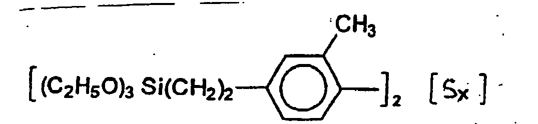

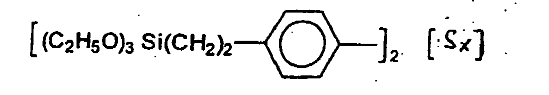

Das Silan kann bereits chemisch mit dem Füllstoff umgesetzt oder als freies Silan dem Prozess zugefügt werden. Im letzten Falle reagiert das Silan mit dem silikatischen Füllstoff unter Abspaltung von Alkohol während der Trocknung des Kautschukpulvers.

Die Menge des eingesetzten Organosilanes in Reinform oder als Gemisch mehrerer Organosilane hängt zum einen von der Art und Menge des verwendeten silikatischen Füllstoffs und zum anderen von dem gewünschten anwendungstechnischen Wertebild ab. Sie liegt auf 100 Teile silikatischen Füllstoff bezogen zwischen 0,5 - 15 %, insbesondere zwischen 5-10%.

Als Kautschuke haben sich folgende Typen nach der Polymerisation in organischem Lösungsmittel, einzeln oder im Gemisch einsetzbar, gezeigt:
Styrolbutadienkautschuk mit Styrolgehalten von 10 - 30 %, sowie Gehalten an 1,2 Vinylbutadien von 20 - 55 % und Isopropenkautschuk, insbesondere 3,4 Polyisopren. Darüber hinaus Butadienkautschuk mit 1,4 cis-Konfiguration ≥ 90 %, Polypentenamer-, Polyoctenamer und Polynorbonenkautschuk, Butylkautschuk und Halobutylkautschuk mit Chlor bzw. Brom als Halogenatom, Ethylen-Propylen (EPM) und Ethylen-Propylen-Dien (EPDM)-Kautschuke mit den üblichen Zusammensetzungen hinsichtlich Ethylen und Propylengehalt. Gleiches gilt beim EPDM hinsichtlich Art und Menge der Terkomponente, hydrierte Nitril-Butadienkautschuk (H-NBR) sowie Ethylen-Vinylacetat-Copolymere. Das erfindungsgemäße Verfahren ist auch geeignet, wenn in anderen Medien hergestellte Kautschukarten (z.B. in Wasser oder in der Gasphase) anschließend in einem geeigneten org. Lösungsmittel aufgelöst werden.

Die erfindungsgemäßen Kautschukpulver können neben den bereits genannten silikatischen Füllstoffen gegebenenfalls weitere Füllstoffe enthalten. Es sind dies vor allen Dingen die in der Gummiindustrie gängigen Industrierusse unterschiedlicher Oberfläche und Struktur. Darüber hinaus können weitere, i.d.R. Naturfüllstoffe, die keine silikatischen Gruppen auf der Oberfläche enthalten, z.B. Kreiden zum Einsatz kommen.

Über den erfindungsgemäßen Herstellprozess können zusätzlich weitere üblicherweise in der Gummiindustrie eingesetzte Zusatzstoffe und Hilfsmittel in das erfindungsgemäße Kautschukpulver eingebracht werden.

Es sind dies u.a. Mineralölweichmacher, Verarbeitungs- und Vulkanisationshilfsmittel, wie Zinkoxid, Zinkstearat, Stearinsäure, Alterungsschutzmittel, Harze und Flammschutzmittel z.B. Al(OH)₃ und Mg(OH)₂, Pigmente, verschiedene Vernetzungsmittel und Schwefel in den gummitechnisch üblichen Konzentrationen.

Es gelingt erfindungsgemäß, feinteiliges, mit Organosiliciumverbindungen modifizierte silikatische Füllstoffe enthaltendes Kautschukpulver herzustellen, das rieselfähig ist und auch nach mechanischer Beanspruchung (z.B. Fördern, Verpacken) rieselfähig bleibt. Diese führen dann zu den feinteiligen Kautschukpulvern, die sich leicht verarbeiten lassen und dabei Vulkanisate mit verbesserten Eigenschaften generieren.

In den nachfolgenden Beispielen werden die Durchführbarkeit und die Vorteile der vorliegenden Erfindung erläutert, ohne dass sie auf diese Beispiele beschänkt sind.

### Eingesetzte Chemikalien für die Herstellung der erfindungsgemäßen Kautschukpulver

Buna VSL 5025 in Cyclohexan
   Lösungs-Styrol-Butadienkautschuk (Bayer AG)
Buna CB 24 in Cyclohexan
   Butadienkautschuk (Bayer AG)
E-SBR Latex
   Emulsions-Styrol-Butadienkautschuk in Wasser (DOW)
Coupsil 8113
   Silanmodifizierte Kieselsäure (Ultrasil VN3 / Si 69 11,4%) (Degussa AG)
Coupsil 8108
   Silanmodifizierte Kieselsäure (Ultrasil VN3 / Si 69 7,25%) (Degussa AG)
Ultrasil 7000
   Hochdispersive, gefällte Kieselsäure mit einer N₂-Oberfläche von 180 m²/g (Degussa AG)
Ultrasil 7000 Filterkuchen
   Hochdispersive, gefällte Kieselsäure mit einer N₂-Oberfläche von 180 m²/g in Form von Filterkuchen (Degussa AG)
Ultrasil 7000 Fällsuspension
   Hochdispersive, gefällte Kieselsäure mit einer N₂-Oberfläche von 180 m²/g in Form von Fällsuspension (Degussa AG)
Si 69
   Bis(triethoxysilylpropyl)tetrasulfan, Organosilan für die Gummiindustrie (Degussa AG)
Si 75
   Bis(triethoxysilylpropyl)disulfan, Organosilan für die Gummiindustrie (Degussa AG)
DEG
   Diethylenglycol
Marlipal 1618/25
   Fettalkoholpolyethylenglykolether (Condea)

### 1. Herstellung eines Kautschukpulvers auf Basis BR und Coupsil 8113

Unter Rühren werden 80 g Coupsil 8113 in Wasser suspendiert. Die Suspensionsdichte beträgt hierbei ca. 6 %. Anschließend werden 22,8 g E-SBR-Latex (Feststoffgehalt 21,9 %) zur Suspension hinzugegeben und das E-SBR/Coupsil-Gemisch mittels Al₂(SO₄)₃-Lösung (10 %ig) auf einen pH-Wert von 4 abgesenkt.

Unter ständigem Rühren gibt man 1 900 g Polybutadienkautschuklösung (in Cyclohexan, 5 %ig) zur Füllstoffsuspension und destilliert anschließend das organische Lösemittel (Cyclohexan) bei ca. 80 °C unter Atmosphärendruck ab.

Nach Beendigung der Umsetzung wird das in Wasser verbleibende BR/Coupsil-Zwischenprodukt über einen Filtrationsprozess (z.B. Büchnertrichter) vom größten Teil des Wassers befreit, anschließend über ein Sieb in Kornform gebracht und in einem Labortrockner auf einen Feuchtegehalt von ca. 2 % getrocknet.

Die thermogravimetrische Bestimmung am getrockneten Produkt ergibt einen der Kieselsäure zuzuordnenden Rückstand von 41,56 %, was einem Füllgrad von ca. 73 phr (theo. 72 phr) entspricht. Der Wert zeigt, dass die silanisierte Kieselsäure vollständig in die BR-Kautschukmatrix aufgenommen wurde. Es konnte damit ein Kautschuk/Kieselsäure/Silan-Verbundsystem in der Darreichungsform eines Kautschukpulvers hergestellt werden.

### 2. Herstellung eines Kautschukpulvers auf Basis L-SBR und Coupsil 8113

Die Vorgehensweise entspricht der aus Versuch 1.
Verwendet werden diesmal:

| | |
|---|---|
| 40 g | Coupsil 8113 in Wasser suspendiert |
| 12,4 g | E-SBR 1500 als Latex (Feststoffgehalt 23,4 %) |
| 950 g | L-SBR gelöst in Cyclohexan (5 %ig) |

Das TGA des getrockneten Kautschukpulvers ergibt einen Wert für die Kieselsäure von 40,41 % und damit einen Füllstoffgehalt von 71 phr (theo. 72 phr).

Somit wurde die Kieselsäure vollständig in die L-SBR-Matrix eingebunden und ein freifließendes Kautschukpulver erhalten.

### 3. Herstellung eines Kautschukpulvers auf Basis BR und Coupsil 8108

Die Vorgehensweise entspricht der aus Versuch 1.
Verwendet werden:

| | |
|---|---|
| 43,2 g | Coupsil 8108 in Wasser suspendiert |
| 12,4 g | E-SBR 1500 als Latex (Feststoffgehalt 23,4 %) |
| 950 g | BR gelöst in Cyclohexan (5 %ig) |

Das TGA des getrockneten Kautschukpulvers ergibt einen Wert für die Kieselsäure von 42,36 % und damit einen Füllgrad von 79 phr (theo. 80 phr).
Auch bei reduzierter Silanmenge bezogen auf die Kieselsäure (niedrigeren Silanisierungsgrad) konnte ein spezifikationsgerechtes Kautschukpulver hergestellt werden. Die Kieselsäure wurde vollständig in das Polymer eingebunden.

### 4. Herstellung eines Kautschukpulvers auf Basis L-SBR, Ultrasil 7000 und Si 69

Unter Rühren werden 40g Ultrasil 7000 Pulver, 3,25 g Si 69, 0,1 g Marlipal 1618/25 und 1,5 g Diethylenglycol in Wasser suspendiert.

Nach Zugabe von 10,2 g E-SBR 1500 Latex (Feststoff 20,6%) stellt man mittels Al₂(SO₄)₃₋Lösung (10 %ig) einen pH-Wert von 4 ein und erhitzt das Gemisch unter Rühren anschließend 40 min. bei 80 °C.

Danach gibt man 950 g L-SBR in Cyclohexan gelöst (5 %ige Lösung) zur Füllstoffsuspension und destilliert unter Rühren das organische Lösungsmittel ab.

Der sich im Wasser befindliche Rückstand wird abfiltriert, über ein Sieb in Form gebracht und anschließend im Labortrockner auf eine Feuchte von ca. 2 % getrocknet.

Die TG-Analyse des erfindungsgemäßen Kautschukpulvers ergab für den Feststoffanteil einen Wert von 41,16 g, was einen Füllgrad von 72 phr (theor. 72 phr) entspricht.

Die Schwefelanalyse, die den Anteil des im Produkt gebundenen Silans wiedergibt, ergab einen Wert von 0,81 % (theor. 0,83 %).

Die Ergebnisse zeigen somit, dass sich mit Hilfe des erfindungsgemäßen Verfahrens ein Kautschukpulver aus L-SBR-Lösung, Kieselsäurepulver und Organosilan herstellen lässt, bei dem sich sämtlicher Füllstoff und die gesamte eingesetzte Silanmenge im Produkt wiederfinden lassen.

### 5. Herstellung eines Kautschukpulvers auf Basis L-SBR, Ultrasil 7000 Filterkuchen und Si 69

Die Vorgehensweise entspricht der aus Versuch 4.
Die eingesetzten Rohstoffe waren:

| | |
|---|---|
| Ultrasil 7000 Filterkuchen | 237,3 g (22,9 % Festst.). |
| L-SBR in Cyclohexan | 1425 g (als 5 %ige Lös.) |
| E-SBR 1500 als Latex | 15,7 g (23,8 % Festst.) |
| DEG | 2,25 g |
| Si 69 | 4,56 g |
| Marlipal 1618/25 | 0,14 g |

Das getrocknete Kautschukpulver zeigt einen TGA-Wert von 42,47 %, das entspricht einem Füllgrad von 74 phr (theo. 72 phr).Die Schwefelanalyse ergab einen Wert von 0,84 % (theor. 0,83 %).Die Ergebnisse zeigen, dass sich auch ausgehend von Kieselsäurefilterkuchen ein spezifikationsgerechtes Kautschukpulver herstellen lässt.

### 6. Herstellung eines Kautschukpulvers unter Verwendung von BR, Ultrasil 7000 Filterkuchen und Si 75

Die Vorgehensweise entspricht der aus Versuch 4.
Folgende Rohmaterialien wurden eingesetzt:

| | |
|---|---|
| Ultrasil 7000 Filterkuchen | 236 g (23,0 % Festst.) |
| Polybutadienkautschuk in Cyclohexan | 1 425 g (als 5 %ige Lös.) |
| E-SBR 1500 als Latex | 15,75 g (23,8 % Festst.) |
| DEG | 2,25 g |
| Si 75 | 4,5 g |
| Marlipal 1618/25 | 0,14 g |

Die TG-Analyse des Produktes zeigt einen Wert von 41,42 %. Dies entspricht einem Füllgrad von 73 phr (theor. 72 phr).

Die Schwefelanalyse ergab einen Wert von 0,51 % (theor. 0,52 %).

Das Verfahren führt auch bei Verwendung von Si 75 zu einem spezifikationsgerechten Produkt.

### 7. Herstellung eines Kautschukpulvers unter Verwendung von L-SBR, Ultrasil 7000 Fällsuspension und Si 75

Unter Rühren werden 670,6 g Ultrasil 7000 Fällsuspension (Feststoffgehalt 8,5 %), deren pH-Wert zuvor auf einen Wert von ca. 6 - 7 eingestellt wurde, 4,5 g Si 75, 2,25 g DEG und 0,14 g Marlipal suspendiert. Anschließend wird der pH-Wert der Mischung mittels 2N NaOH auf einen Wert von ca. 10,0 eingestellt. Danach erfolgt die Zugabe von 18,2 g E-SBR-Latex (Feststoff 20,6%) mit anschließender Absenkung des pH-Wertes auf einen Wert von 4 (Al₂(SO₄)₃ -Zugabe). Das Gemisch wird daraufhin ca. 40 min. bei 80 °C erhitzt und dann mit 1 250 g 5 %iger L-SBR-Lösung in Cyclohexan versetzt.

Unter Wärmezuführung und Rühren wird das Cyclohexan abdestilliert und der sich im Wasser befindliche Rückstand auf einen Büchnertrichter überführt.

Nach mehrmaligem Waschen des Filterkuchens wird das Produkt über ein Sieb in Kornform gebracht und anschießend im Laborwirbelbett getrocknet.

Die TG-Analyse zeigt einen Wert von 41,48 % und damit einen Kieselsäurefüllgrad von 72 phr (theor. 72 phr).

Die Schwefelbestimmung zeigt mit 0,50 % an, dass das Silan vollständig im Produkt enthalten ist (theor. 0,52 %).

Es gelingt somit nach dem erfindungsgemäßen Verfahren auch mit Kieselsäurefällsuspension ein spezifikationsgerechtes Kautschukpulver herzustellen.

### 8. Herstellung eines Kautschukpulvers auf Basis BR, Ultrasil 7000 Fällsuspension und Si 69

Die Vorgehensweise entspricht der aus Versuch 7.

### Folgende Rohmaterialien wurden eingesetzt:

| | |
|---|---|
| Ultrasil 7000 Fällsuspension | 670,6 g (8,5 % Festst.) |
| Polybutadienkautschuk in Cyclohexan | 1 250 g (5,0 %ig) |
| E-SBR 1500 | 18,2 g (20,6 % Festst.) |
| DEG | 2,25 g |
| Si 69 | 4,9 g |
| Marlipal 1618/25 | 0,14 g |

Die TG-Analyse des Kautschukpulvers zeigt einen Wert von 40,6 %, was einem Füllgrad von 71 phr (theor. 72 phr) entspricht.

Die Schwefelanalyse ergab einen Wert von 0,82 % (theor. 0,83 %).

Das gewünschte Produkt konnte damit spezifikationsgerecht hergestellt werden.

**Anwendungstechnische Untersuchungen der erfindungsgemäßen** Kautschukpulver

### • Eingesetzte Rohmaterialien

Buna VSL 5025
   Styrol-Butadienkautschuk auf Basis von Lösungspolymerisation (Bayer AG)
Buna CB 24
   Butadienkautschuk mit einem 1,4 cis-Anteil > 96 % (Bayer AG)
Ultrasil 7000
   Hochdispersive, gefällte Kieselsäure mit einer N₂-Oberfläche von 180 m²/g (Degussa AG)
Si 69
   Bis(triethoxysilylpropyl)tetrasulfan, Kupplungsagenz für kieselsäurehaltige Kautschukmischungen (Degussa AG)
Si 75
   Bis(triethoxysilylpropyl)disulfan, Kupplungsagenz für kieselsäurehaltige Reifenlaufflächen (Degussa AG)
Naftolen ZD
   Aromatischer Mineralölweichmacher
Protector G35
   Ozonschutzwachs
Vulkacit D
   Diphenylguanidin (Bayer AG)
   Vulkacit CZ
   N-Cyclohexyl-2-benzthiazyl-sulfenamid

### • Gummitechnische Prüfmethoden

| | | |
|---|---|---|
| Mooney Viskosität ML 1+4 | [ME] | DIN 53 523/3 |
| Zugfestigkeit | [MPa] | DIN 53 504 |
| Modul 300% | [MPa] | DIN 53 504 |
| Bruchdehnung | [%] | DIN 53 504 |
| Shore Härte | [-] | DIN 53 505 |
| Abrieb | [mm³] | DIN 53 516 |
| Visko-elastische Eigenschaften | [-] | DIN 53 513 |
| Dispersion (Topographie) | [%] | |

### 1. Vergleich zweier erfindungsgemäßer Kautschukpulver auf Basis L-SBR und BR im Verschnitt mit Kieselsäurefilterkuchen

Folgende Kautschukpulver werden im Vergleich zum Standard eingesetzt:

| | | |
|---|---|---|
| PK I | L-SBR* | 100 Teile |
| | Ultrasil 7000 FK | 72 Teile |
| | Si 69 | 6,4 Teile |
| PKII | BR** | 100 Teile |
| | Ultrasil 7000 FK | 72 Teile |
| | Si 69 | 6,4 Teile |

| | | |
|---|---|---|
| * Lösungs-SBR 5025-0 ** Butadienkautschuk CB 24 | | |

Die Herstellung der Produkte erfolgt vergleichsweise wie in Beispiel 5 und 6 beschrieben.

**1a. Rezeptur**

| | **Standard** | **PK I/PKII** |
|---|---|---|
| Buna VSL 5025-0 | 70 | - |
| CB 24 | 30 | - |
| PK I | - | 127,7 |
| PK II | - | 54,7 |
| Ultrasil 7000 GR | 80 | - |
| Si 69 | 6,4 | - |
| ZnO RS | 3 | 3 |
| Stearinsäure | 2 | 2 |
| Naftolen ZD | 25 | 25 |
| Protector G 35 | 1 | 1 |
| Vulkacit D | 2 | 2 |
| Vulkacit CZ | 1,5 | 1,5 |
| Schwefel | 1,5 | 1,9 |

### 1b. Mischvorschrift

| Innenmischer GK 1,5 E; Friktion 1:1; Stempeldruck 5,5 bar | | | |
|---|---|---|---|
| 70 UPM; Durchflusstemp. 70 °C; Batchtemp. ≤ 150 °C | | | |
| 0-1' | Polymere | 0-2' | PK, Chemikalien |
| 1-3' | ½ KS, ZnO, Stea., Öl, Si69 | 2' | Säubern |
| 3-4' | ½ KS, Alterungsschutz | 2-4' | Mischen, Drehzahlvar. |
| 4' | Säubern | 4' | Ausfahren |
| 4,5' | Mischen | | |
| 5' | Säubern | | |
| 5-6' | Mischen und Ausfahren | | |

| 80 UPM; Durchflusstemp. 80°C; Batchtemp. ≤ 150 °C | | | |
|---|---|---|---|
| 0-2' | Batch Stufe 1 plastizieren | | |
| 2-5' | Mischen | | |
| 5' | Ausfahren | | |

| 40 UPM; Durchflusstemp. 50 °C; Batchtemp. ≤ 110 °C | | | |
|---|---|---|---|
| 0-2' | Batch Stufe 2, Vernetzungschemikalien | | |
| 2' | Ausstoßen anschließend auf Walze Fell bilden | | |

### 1c. Gummitechnische Daten (Vulkanisationstemperatur 160 °C)

| Methode | Einheit | Standard | PKI/PKII |
|---|---|---|---|
| ML 1+4 | [ME] | 93 | 95 |
| Zugfestigkeit | [MPa] | 13,4 | 15,8 |
| Modul 300% | [MPA] | 8,9 | 8,4 |
| Bruchdehnung | [%] | 250 | 300 |
| Shore Härte | [-] | 63 | 66 |
| DIN Abrieb | [mm³] | 55 | 49 |
| Peakfläche Disp. | [%] | 6,8 | 0,57 |
| tan δ 0 °C | [-] | 0,442 | 0,488 |
| tan δ 60 °C | [-] | 0,135 | 0,139 |

Die erfindungsgemäßen Kautschukpulver zeigen Vorteile in den Festigkeitswerten und eine deutlich bessere Dispersion des Füllstoffs trotz einer verkürzten Mischzeit.

### 2. Vergleich zweier Kautschukpulver auf Basis L-SBR bzw. BR als Verschnitt mit Kieselsäurefilterkuchen und Si 75

Folgende Kautschukpulver werden im Vergleich zum Standard eingesetzt:

| | | |
|---|---|---|
| PK III | L-SBR* | 100 Teile |
| | Ultrasil 7000 FK | 72 Teile |
| | Si 75 | 6,4 Teile |
| | | |
| PK IV | BR** | 100 Teile |
| | Ultrasil 7000 FK | 72 Teile |
| | Si 75 | 6,4 Teile |

| | | |
|---|---|---|
| * Lösungs-SBR 5025-0 **Butadienkautschuk CB 24 | | |

Die Herstellung der Produkte erfolgt vergleichsweise wie in Beispiel 6 beschrieben.

### 2a. Rezeptur

| | Standard | PK III/PKIV |
|---|---|---|
| Buna VSL 5025-0 | 70 | - |
| CB 24 | 30 | - |
| PK III | - | 127,7 |
| PK IV | - | 54,7 |
| Ultrasil 7000 GR | 80 | - |
| Si 75 | 6,4 | - |
| ZnO RS | 3 | 3 |
| Stearinsäure | 2 | 2 |
| Naftolen ZD | 25 | 25 |
| Protector G 35 | 1 | 1 |
| | | |
| Vulkacit D | 2 | 2 |
| Vulkacit CZ | 1,5 | 1,5 |
| Schwefel | 2,1 | 2,1 |

### 2b. Mischvorschrift

Analog 1b, anstelle von Si 69 wurde Si 75 eingesetzt.

### 2c. Gummitechnische Daten (Vulkanisationstemperatur 160 °C)

| Methode | Einheit | Standard | PK III/PKIV |
|---|---|---|---|
| Zugfestigkeit | [MPa] | 12,7 | 15,5 |
| Modul 300% | [MPA] | 10,2 | 10,8 |
| Shore Härte | [-] | 67 | 64 |
| Bruchdehnung | [%] | 340 | 370 |
| Peakfläche Disp. | [%] | 5,5 | 0,3 |
| tan δ 60 °C | [-] | 0,140 | 0,138 |

Die erfindungsgemäßen Kautschukpulver zeigen Vorteile in den Festigkeitswerten und eine deutlich bessere Dispersion des Füllstoffs trotz einer verkürzten Mischzeit.

### 3. Vergleich zweier erfindungsgemäßer Kautschukpulver auf Basis L-SBR und BR im Verschnitt mit Kieselsäurefällsuspension und Si 75

Folgende Kautschukpulver werden im Vergleich zum Standard eingesetzt:

| | | |
|---|---|---|
| PK V | L-SBR* | 100 Teile |
| | Ultrasil 7000 FS | 72 Teile |
| | Si 75 | 6,4 Teile |
| | | |
| PK VI | BR** | 100 Teile |
| | Ultrasil 7000 FS | 72 Teile |
| | Si 75 | 6,4 Teile |

| | | |
|---|---|---|
| * Lösungs-SBR 5025-0 ** Butadienkautschuk CB 24 | | |

Die Herstellung der Produkte erfolgt vergleichsweise wie in Beispiel 7 beschrieben.

### 3a. Rezeptur

| | Standard | PK V/PKVI |
|---|---|---|
| Buna VSL 5025-0 | 70 | - |
| CB 24 | 30 | - |
| PK V | - | 127,7 |
| PK VI | - | 54,7 |
| Ultrasil 7000 GR | 80 | - |
| Si 75 | 6,4 | - |
| ZnO RS | 3 | 3 |
| Stearinsäure | 2 | 2 |
| Naftolen ZD | 25 | 25 |
| Protector G 35 | 1 | 1 |
| Vulkacit D | 2 | 2 |
| Vulkacit CZ | 1,5 | 1,5 |
| Schwefel | 2,1 | 2,1 |

### 3b. Mischvorschrift

Siehe Beispiel 2b

### 3c. Gummitechnische Daten (Vulkanisationstemperatur 160 °C)

| Methode | Einheit | Standard | PK V/PKVI |
|---|---|---|---|
| Zugfestigkeit | [MPa] | 12,7 | 14,7 |
| Modul 300% | [MPA] | 10,2 | 10,1 |
| Bruchdehnung | [%] | 340 | 380 |
| Shore Härte | [-] | 67 | 66 |
| Peakfläche Disp. | [%] | 5,5 | 0,5 |
| tan δ 60°C | [-] | 0,144 | 0,137 |

Die erfindungsgemäßen Kautschukpulver zeigen Vorteile in den Festigkeitswerten und in der Dispersion.

### Literatur

[1] U. Görl, K.H. Nordsiek, Kautsch. Gummi Kunstst. 51 (1998) 250
[2] U. Görl, H. Lauer, Gummi, Fasern Kunstst. **53** (2000) 261
[3] R. Uphus, O. Skibba, R.H. Schuster, U. Görl, Kautsch. Gummi Kunstst. **53** (2000) 276
[4] U. Görl, J. Münzenberg, D. Luginsland, A. Müller, Kautsch. Gummi Kunstst. **52** (1999) 588
[5] EP 0 501 227, US 5 227 425
[6] G. Agostini, J. Bergh, Th. Materne, Oct. 1994 Akron, Ohio/USA
[7] U.Le Maitre, The Tire Rolling Resistance, Tyre Tech '92 Conference, Paris/France 1992
[8] A. Hunsche, U. Görl, A. Müller, Kautsch. Gummi Kunstst. **50** (1997) 881
[9] A. Hunsche, U. Görl, G. Koban, Th. Lehmann, Kautsch. Gummi Kunstst. **51** (1998) 525
[10] S. Wolf, Theoretical and Practical Aspects of Si 69-Application with Silica Containing Compounds, PRI-Meeting, New Delhi, Dec. 1982
[11] U. Görl, A. Parkhouse, Kautsch. Gummi Kunstst. 52 (1999) 493
[12] U.Görl, Gummi, Fasern, Kunstst. **51** (1998)416

## Patentansprüche

1. Verfahren zur Herstellung von feinteiligen Kautschukpulvern, bestehend aus einem oder mehreren silikatischen Füllstoffen, einem oder mehreren bifunktionellen Organosilanen und einer oder mehreren Kautschukart(en), hergestellt nach dem Lösungspolymerisationsverfahren und/oder sich in einem organischen Lösungsmittel befindlichen Kautschuk,
**dadurch gekennzeichnet, dass** man:
a) den oder die silikatischen Füllstoff(e) und die Organosiliciumverbindung(en) direkt oder vormodifiziert, gegebenenfalls in Anwesenheit einer oberflächenaktiven Substanz und/oder gegebenenfalls einer oder mehrerer Kieselsäureoberflächenaktivierender Substanz(en) in Wasser emulgiert,
b) die so hergestellte Suspension im pH-Wert Bereich von 5 - 10, mit ≤ 15 phr einer Kautschukemulsion versetzt, gegebenenfalls den pH-Wert des Gemisches mittels einer Brönsted oder Lewissäure auf einen Wert von 2 - 7 einstellt,
c) das unter a) oder unter a) und b) hergestellte Gemisch bei einer Temperatur von 30 - 90 °C für 5 - 120 min erhitzt,
d) anschließend das im organischen Lösungsmittel befindliche Polymer zur unter a) und b) und c) hergestellten Füllstoffsuspension hinzu gibt,
e) anschließend das organische Lösungsmittel abtrennt,
f) das sich anschließend im Wasser befindliche Kautschukpulver nach Methoden der Fest/Flüssig-Trennung vom größten Teil des Wassers befreit,
g) das Produkt durch geeignete Granulationstechniken in partikulierte Form bringt,
h) mit Trocknungsmethoden auf Restfeuchten ≤ 2 % einstellt.

2. Verfahren nach Anspruch 1,
**dadurch gekennzeichnet,**
**dass** als Lösungskautschuke Styrolbutadienkautschuk mit Styrolgehalten von 10 - 30 %, sowie Gehalten an 1,2 Vinylbutadien von 20 - 55 %, Isopropenkautschuk, Butadienkautschuk mit 1,4 cis-Konfiguration ≥ 90 %, Polypentenamer-, Polyoctenamer, Polynorbonenkautschuk, Butylkautschuk und Halobutylkautschuk mit Chlor bzw. Brom als Halogenatom, Ethylen-Propylen (EPM) und Ethylen-Propylen-Dien (EPDM)-Kautschuke eingesetzt werden.

3. Verfahren nach einem der vorhergehenden Ansprüche,
**dadurch gekennzeichnet,**
**dass** man eine oder mehrere Organosiliciumverbindungen der allgemeinen Formeln I und II
[Rₙ-(RO)₃₋ₙ Si-(Alk)ₘ-(Ar)ₚ]_{q} [B] (I)
R¹ ₙ-(RO)₃₋ₙ Si-(Alkyl) (II)
oder
R¹ ₙ-(RO)₃₋ₙ Si-(Alkenyl) (III)
einsetzt, in denen bedeuten:
B: -SCN, -SH, -Cl, -NH₂ (wenn q=1) oder -Sx- (wenn q=2)
R und R¹: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können.
n: 0; 1 oder 2
Alk: einen zweiwertigen geraden oder verzweigten Kohlenstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p und n nicht gleichzeitig 0 bedeuten
x: eine Zahl von 2 bis 8
Alkyl: einen einwertigen geraden oder verzweigten gesättigten Kohlenwasserstoffrest mit 1 bis 20 Kohlenstoffatomen,
Alkenyl: einen einwertigen geraden oder verzweigten ungesättigten Kohlenwasserstoffrest mit 2 bis 20 Kohlenstoffatomen.

4. Verfahren nach einem der vorhergehenden Ansprüche,
**dadurch gekennzeichnet,**
**dass** man die Organosiliciumverbindung(en) in Mengen von 0,5 - 15, bezogen auf 100 Teile silikatischen Füllstoff, als freies ungebundenes Silan zusammen mit dem Füllstoff oder gegebenenfalls als bereits vorsilanisierte Füllstoffvariante im Wasser suspendiert.

5. Verfahren nach einem der vorhergehenden Ansprüche,
**dadurch gekennzeichnet,**
**dass** die Füllstoffsuspension oberflächenaktive Substanzen, nicht ionische, kationische oder anionische Tenside, in Mengen von 0,1 - 2 %, bezogen auf den Füllstoffanteil, enthält.

6. Verfahren nach einem der vorhergehenden Ansprüche,
**dadurch gekennzeichnet,**
**dass** die Füllstoffsuspension Kieselsäureaktivatoren aus der Klasse der Di- und Polyalkohole und/oder der Amine in Mengen von 0,3 - 9 %, bezogen auf den Füllstoff, enthalten.

7. Verfahren nach einem der vorhergehenden Ansprüche,
**dadurch gekennzeichnet,**
**dass** man eine oder mehrere Kautschukemulsionen zur Füllstoff/Silansuspension hinzugibt, die jedoch einen Anteil am Gesamtkautschuk innerhalb des Kautschukpulvers von 15 phr (parts per hundred rubber) nicht überschreitet.

8. Verfahren nach einem der vorhergehenden Ansprüche,
dass der pH-Wert des hergestellten Gemisches in Wasser mittels einer Brönsted oder Lewissäure auf einen Wert von 2 - 7 eingestellt wird.

9. Verfahren nach einem der vorhergehenden Ansprüche,
dass man das Stoffgemisch in Wasser bei Temperaturen von 30 - 90 °C für 5 - 120 min erhitzt.

10. Verfahren nach einem der vorhergehenden Ansprüche,
**dadurch gekennzeichnet,**
**dass** man einen oder mehrere silikatische Füllstoffe mit einer Stickstoffoberfläche (gem. ISO 350 5794/1D) von 1 - 1 000 m²/g und einem Strukturbereich [DBP-Zahl (ASTM D 2415-92)] von 150 - 400 ml/100 g in Mengen von 5 - 300 phr einsetzt.

11. Verfahren nach einem der vorhergehenden Ansprüche,
dass man eine Kautschuklösung, bestehend aus einer oder mehreren Kautschukart(en) in einem organischen Lösungsmittel zum hergestellten Gemisch in Wasser hinzufügt und anschließend das Lösungsmittel, in der Regel bei vom Siedepunkt des Lösungsmittels abhängigen Temperaturen und Drücken entfernt.

12. Verfahren nach einem der vorhergehenden Ansprüche,
**dadurch gekennzeichnet,**
**dass** der erfindungsgemäße Kautschuk/Füllstoff/Silan-Verbund in der wässrigen Phase ausgebildet wird.

13. Verfahren nach einem der vorhergehenden Ansprüche,
dass man neben den silikatischen Füllstoffen weitere in der Gummianwendung übliche Füllstoffe, Verarbeitungshilfsmittel und Chemikalien in den kautschuktechnisch üblichen Konzentrationen zusetzen kann.

14. Verfahren nach einem der vorhergehenden Ansprüche,
**dadurch gekennzeichnet, dass** der größte Teil des das Produkt enthaltenen Wassers mittels eines mechanischen Trennschrittes entfernt wird.

15. Verfahren nach einem der vorhergehenden Ansprüche,
**dadurch gekennzeichnet, dass** das Produkt nach der Entwässerung der Formgebung in Partikelform überführt wird.

16. Feinteilige Kautschulpulver,
**dadurch gekennzeichnet,**
**dass** sie gemäß den vorhergehenden Ansprüchen hergestellt werden.

17. Verwendung feinteiliger Kautschukpulver nach einem der vorhergehenden Ansprüche zur Herstellung von vulkanisierbaren Kautschukmischungen.

## Claims

1. A process for preparing fine-particle rubber powders, composed of one or more silicatic fillers, of one or more bifunctional organosilanes, and of one or more rubbers, prepared by solution polymerization, and/or from rubber present in an organic solvent,
**characterized in that**:
a) the silicatic filler(s) and the organosilicon compound(s) are emulsified in water, directly or after modification, where appropriate in the presence of a surface-active substance and/or, where appropriate, of one or more substances which activate(s) the surface of silica,
b) in a pH range from 5 to 10, the resultant suspension is treated with ≤ 15 phr of a rubber emulsion, and, where appropriate, the pH of the mixture is adjusted to a value of from 2 to 7 by means of a Brönsted or Lewis acid,
c) the mixture prepared in a) or in a) and b) is heated for from 5 to 120 min at a temperature of from 30 to 90°C,
d) the polymer in the organic solvent is then added to the filler suspension prepared in a) and b) and c),
e) the organic solvent is then removed,
f) most of the water from the rubber powder then present in water is removed, using methods of solid/liquid separation,
g) suitable granulation techniques are used to convert the product to particulate form, and
h) the residual moisture level of the product is adjusted by drying methods to ≤2%.

2. A process according to claim 1,
**characterized in that**
the solution rubbers used comprise styrenebutadiene rubber with styrene contents of from 10 to 30%, and also with contents of from 20 to 55% of 1,2-vinylbutadiene, isoprene rubber, butadiene rubber with 1,4-cis configuration ≥90%, polypentenamer rubber, polyoctenamer rubber, polynorbornene rubber, butyl rubber or halobutyl rubber having chlorine or bromine as halogen atom, ethylene-propylene (EPM), or ethylene-propylene-diene (EPDM) rubber.

3. A process according to any one of the preceding
claims,
**characterized in that**
use is made of one or more organosilicon compounds of the general formulae I and II
[Rₙ- (RO)₃₋ₙSi - (alk)ₘ- (ar)ₚ]_{q}[B] (I)
R¹ ₙ- (RO)₃₋ₙSi- (alkyl) (II)
or
R¹ ₙ- (RO)₃₋ₙSi- (alkenyl) (III)
where:
B is -SCN, -SH, -Cl, -NH₂ (if q=1) or -Sx-(if q=2)
Rand R¹ are an alkyl group having from 1 to 4 carbon atoms, branched or unbranched, or the phenyl radical, and the meaning of each R and R¹ may be the same or different.
n is 0, 1 or 2
alk is a straight-chain or branched bivalent hydrocarbon radical having from 1 to 6 carbon atoms,
m is 0 or 1
ar is an arylene radical having from 6 to 12 carbon atoms,
p is 0 or 1 with the proviso that p and n are not simultaneously 0
x is a number from 2 to 8
alkyl is a straight or branched saturated monovalent hydrocarbon radical having from 1 to 20 carbon atoms
alkenyl is a straight or branched unsaturated monovalent hydrocarbon radical having from 2 to 20 carbon atoms.

4. A process according to any one of the preceding
claims,
**characterized in that**
based on 100 parts of silicatic filler, from 0.5 to 15 parts of organosilicon compound(s) are suspended in water; in the form of free unbound silane together with the filler, or, where appropriate, in the form of a presilanized modification of the filler.

5. A process according to any one of the preceding
claims,
**characterized in that**
the filler suspension comprises, as surface-active substances, based on the filler content, from 0.1 to 2% of non-ionic, cationic, or anionic surfactants.

6. A process according to any one of the preceding
claims,
**characterized in that**
the filler suspension comprises, based on the filler, from 0.3 to 9% of silica activators from the class of the di- and polyalcohols, and/or that of the amines.

7. A process according to any one of the preceding
claims,
**characterized in that**
one or more rubber emulsions are added to the filler/silane suspension, but the proportion of these, based on the entirety of the rubber within the rubber powder, does not exceed 15 phr (parts per hundred rubber).

8. A process according to any one of the preceding
claims,
**characterized in that**
the pH of the mixture prepared in water is adjusted to a value of from 2 to 7 by means of a Brönsted or a Lewis acid.

9. A process according to any one of the preceding
claims,
**characterized in that** the mixture of substances in water is heated for from 5 to 120 min at temperatures of from 30 to 90°C.

10. A process according to any one of the preceding
claims,
**characterized in that**
use is made of from 5 to 300 phr of one or more silicatic fillers with a nitrogen surface area (to IS 350 5794/1D) of from 1 to 1 000 m²/g and with a structural range [DBP value (ASTM D 2415-92)] of from 150 to 400 ml/100 g.

11. A process according to any one of the preceding
claims,
**characterized in that** a rubber solution composed
of one or more rubbers in an organic solvent is added to the prepared mixture in water, and then the solvent is removed, generally at temperatures and pressures dependent on the boiling point of the solvent.

12. A process according to any one of the preceding
claims,
**characterized in that**
the rubber/filler/silane composite of the invention is formed in the aqueous phase.

13. A process according to any one of the preceding
claims,
wherein, besides the silicatic fillers, other fillers, processing aids, and chemicals customary in rubber applications may be added, in the concentrations conventional in rubber technology.

14. A process according to any one of the preceding
claims,
**characterized in that** most of the water comprising the product is removed by means of a mechanical removal step.

15. A process according to any one of the preceding
claims,
wherein, after dewatering, the product is transferred in particle form to the shaping process.

16. A fine-particle rubber powder,
**characterized in that**
it is prepared according to any one of the preceding claims.

17. The use of a fine-particle rubber powder according to any one of the preceding claims for preparing vulcanizable rubber mixtures.

## Revendications

1. Procédé en vue de la fabrication de poudres de caoutchouc finement divisées, se composant d'une ou de plusieurs charges de silicate, d'un ou de plusieurs organosilanes bifonctionnels et d'un ou de plusieurs genres de caoutchouc, fabriquées conformément au procédé de polymérisation en solution et/ou dans un caoutchouc se trouvant dans un solvant organique,
**caractérisé en ce que**:
a) l'on procède à l'émulsification dans l'eau de la ou des charges de silicate et du ou des composés organosilicium, directement ou prémodifiés, le cas échéant, en présence d'une substance tensioactive et/ou, le cas échéant, d'une ou de plusieurs substances activant les surfaces d'acide silicique,
b) l'on fait réagir la suspension ainsi fabriquée dans le domaine de valeur de pH de 5 - 10, avec ≤ 15 phr d'une émulsion de caoutchouc, le cas échéant, que l'on ajuste la valeur de pH du mélange à l'aide d'un acide de Brönsted ou de Lewis à une valeur de 2 - 7,
c) l'on échauffe le mélange fabriqué sous a) ou sous a) et sous b) à une température de 30 - 90 °C pendant 5 - 120 minutes,
d) l'on ajoute ensuite le polymère se trouvant dans le solvant organique à la suspension de charges fabriquée sous a) et b) et c),
e) l'on sépare ensuite le solvant organique,
f) l'on libère la poudre de caoutchouc se trouvant ensuite dans l'eau, conformément aux méthodes de la séparation solides/liquides d'une grande partie de l'eau,
g) l'on met le produit, par l'intermédiaire de techniques de granulation appropriées, sous une forme particulaire,
h) l'on ajuste celui-ci, à l'aide de méthodes de séchage, à des humidités résiduelles ≤ 2 %.

2. Procédé selon la revendication 1, **caractérisé en ce que** l'on utilise, en tant que caoutchoucs en solution, le caoutchouc butadiène styrène ayant des teneurs en styrène de 10 - 30 %, ainsi que des teneurs en 1,2-vinylbutadiène de 20 - 55 %, le caoutchouc isoprène, le caoutchouc butadiène avec la configuration 1,4-cis ≥ 90%, le caoutchouc polypentènamère, le caoutchouc polyoctènamère, le caoutchouc polynorbornène, le caoutchouc butyle et le caoutchouc halobutyle, avec du chlore ou du brome en tant qu'atome d'halogène, les caoutchoucs éthylène-propylène (EPM) et éthylène-propylène-diène.

3. Procédé selon l'une quelconque des revendications précédentes, **caractérisé en ce que** l'on utilise un ou plusieurs composés organosilicium des formules générales I et II
[Rₙ- (RO)₃₋ₙSi- (Alk)ₘ- (Ar)ₚ]_{q}[B] (I)
R¹ ₙ- (RO)₃₋ₙSi- (Alkyl) (II)
ou
R¹ ₙ- (RO)₃₋ₙSi- (Alcényl) (III)
dans lesquelles les entités ci-dessus sont définies comme suit:
B: -SCN, -SH, -Cl, -NH₂ (si q=1) ou -Sx- (si q=2)
R et R¹: un groupement alkyle, ayant de 1 à 4 atomes de carbone, linéaire ou ramifié, le radical phényle, tous les radicaux R et R¹ pouvant, à chaque fois, avoir une signification identique ou différente,
n: 0; 1 ou 2,
Alk: un radical hydrocarboné divalent, linéaire ou ramifié, ayant de 1 à 6 atomes de carbone,
m: 0 ou 1,
Ar: un radical arylène ayant de 6 à 12 atomes de carbone,
p: 0 ou 1, sous réserve que p et n ne soient pas simultanément 0,
x: un chiffre de 2 à 8,
Alkyl: un radical hydrocarboné monovalent, linéaire ou ramifié, saturé, ayant de 1 à 20 atomes de carbone,
Alcényl: un radical hydrocarboné monovalent, linéaire ou ramifié, insaturé, ayant de 2 à 20 atomes de carbone.

4. Procédé selon l'une quelconque des revendications précédentes, **caractérisé en ce que** l'on met en suspension dans l'eau le ou les composés organosilicium dans des quantités de 0,5 - 15, par rapport à 100 parties de la charge de silicate, en tant que silane non lié libre conjointement à la charge ou, le cas échéant, en tant que variante de charge déjà présilanisée.

5. Procédé selon l'une quelconque des revendications précédentes, **caractérisé en ce que** la suspension de charge contient, en tant que substances tensioactives, des agents tensioactifs non ioniques, cationiques ou anioniques, dans des quantités de 0,1 - 2 %, par rapport à la proportion de la charge.

6. Procédé selon l'une quelconque des revendications précédentes, **caractérisé en ce que** la suspension de charge contient des agents activateurs de l'acide silicique de la classe des dialcools et des polyalcools et/ou des amines, dans des quantités de 0,3 - 9 %, par rapport à la charge.

7. Procédé selon l'une. quelconque des revendications précédentes, **caractérisé en ce que** l'on ajoute, à la suspension charge/silane, une ou plusieurs émulsions de caoutchouc, qui ne dépassent, toutefois, pas une proportion en caoutchouc total, au sein de la poudre de caoutchouc, de 15 phr (parts per hundred rubber ou parties pour 100 parties de caoutchouc).

8. Procédé selon l'une quelconque des revendications précédentes, **caractérisé en ce que** la valeur de pH du mélange fabriqué dans l'eau à l'aide d'un acide de Brönsted ou de Lewis est ajustée à une valeur de 2 - 7.

9. Procédé selon l'une quelconque des revendications précédentes, **caractérisé en ce que** l'on chauffe le mélange de substances dans l'eau à des températures de 30 - 90 °C pendant 5 - 120 minutes.

10. Procédé selon l'une quelconque des revendications précédentes, **caractérisé en ce que** l'on utilise une ou plusieurs charges de silicate ayant une surface d'azote (conformément à la norme ISO 350 5794/1D) de 1 - 1 000 m²/g et un domaine de structure [indice DBP (norme ASTM D 2415-92)] de 150 - 400 ml/100 g dans des quantités de 5 - 300 phr.

11. Procédé selon l'une quelconque des revendications précédentes, **caractérisé en ce que** l'on ajoute au mélange fabriqué dans l'eau une solution de caoutchouc, se composant d'un ou de plusieurs genres de caoutchouc dans un solvant organique et l'on élimine ensuite le solvant, en règle générale, à des températures et à des pressions dépendant du point d'ébullition du solvant.

12. Procédé selon l'une quelconque des revendications précédentes, **caractérisé en ce que** le composite caoutchouc/charge/silane est formé en phase aqueuse.

13. Procédé selon l'une quelconque des revendications précédentes, **caractérisé en ce que** l'on peut ajouter, outre les charges de silicate, d'autres charges usuelles dans les applications du caoutchouc, des adjuvants de mise en oeuvre et des produits chimiques, dans les concentrations usuelles du point de vue de la technologie du caoutchouc.

14. Procédé selon l'une quelconque des revendications précédentes, **caractérisé en ce que** la plus grande partie de l'eau contenue dans le produit est éliminée par l'intermédiaire d'une étape de séparation mécanique.

15. Procédé selon l'une quelconque des revendications précédentes, **caractérisé en ce que** le produit est converti, après la déshydratation de la mise en forme, en particules.

16. Poudre de caoutchouc finement divisée, **caractérisée en ce qu'**elle est fabriquée selon l'une quelconque des revendications précédentes.

17. Utilisation de poudre de caoutchouc finement divisée selon l'une quelconque des revendications précédentes en vue de la fabrication de mélanges de caoutchouc capables de subir une vulcanisation.
